# EUROPÄISCHE PATENTSCHRIFT

(11) **EP 0 605 494 B1**
(45) Veröffentlichungstag und Bekanntmachung des Hinweises auf die Patenterteilung: **07.02.1996**
(21) Anmeldenummer: 92919438.9
(22) Anmeldetag: 16.09.1992
(51) Int. Cl.: C08F 299/02, C08F 8/32, C09D 163/10

(54) **VERFAHREN ZUR HERSTELLUNG EINER WÄSSRIGEN BESCHICHTUNGSZUSAMMENSETZUNG**
METHOD OF PRODUCING AN AQUEOUS COATING COMPOSITION
PROCEDE DE PRODUCTION D'UNE COMPOSITION DE REVETEMENT AQUEUSE

(30) Priorität: 24.09.1991 DE 4131706
(43) Veröffentlichungstag der Anmeldung: 13.07.1994
(73) Patentinhaber: BASF Lacke + Farben AG, D-48165 Münster-Hiltrup (DE)
(72) Erfinder: CIBURA, Klaus, D-48167 Münster (DE); FIGGE, Hans-Jürgen, D-4400 Münster (DE); WILLMER, Regina, D-4400 Münster (DE); DARTMANN, Holger, 4406 Drensteinfurt (DE)
(74) Vertreter: Münch, Volker, Dr.
(86) Internationale Anmeldenummer: EP9202123
(87) Internationale Veröffentlichungsnummer: WO9306146

(56) Entgegenhaltungen:
- WO-A-88/01287
- US-A- 4 076 676

## Beschreibung

Die vorliegende Erfindung betrifft ein Verfahren zur Herstellung einer wäßrigen Beschichtungszusammensetzung, enthaltend ein Carboxylgruppen enthaltendes Epoxidharz, ggf. Vernetzungsmittel, organische Lösemittel, ggf. übliche Hilfsstoffe und Additive sowie ggf. Pigmente und Füllstoffe, wobei die Neutralisation der organischen Bindemittellösung mit tertiärem Amin unter Wärmezufuhr erfolgt. Die Erfindung betrifft weiterhin die nach dem Verfahren hergestellten wäßrigen Beschichtungeszusammensetzungen sowie deren Verwendung zur Beschichtung von Emballagen, vorzugsweise zur Beschichtung von Dosen.

Aus der US-PS 4,212,781 sind wäßrige Beschichtungsmittel für Emballagen bekannt, deren Bindemittel hergestellt werden durch radikalische Polymerisation von ethylenisch ungesättigten Monomeren, die zum Teil Carboxylgruppen enthalten, in Gegenwart eines Epoxidharzes unter Verwendung von mindestens 3 Gew.-%, bezogen auf das Gesamtgewicht der Monomeren, peroxidischer Initiatoren. Gemäß der US-Patentschrift wird die organische Lösung der erhaltenen Bindemittelmischung unter Verwendung von Neutralisationsmitteln, z.B. tertiären Aminen, in Wasser dispergiert. Vorzugsweise wird dabei die organische Bindemittellösung in eine Mischung von Wasser und Dimethylethanolamin gegeben. Es ist aber auch möglich, das Amin mit etwas Wasser unter kräftigem Rühren der organischen Lösung zuzugeben, wobei in der US-PS 4,212,781 die pauschale Angabe gemacht wird, daß bei diesem Vorgang ggf. erwärmt werden könne. In den Beispielen der US-PS 4,212,781 wird die Neutralisation derart durchgeführt, daß die auf 85°C abgekühlte organische Bindemittellösung zu der Amin/Wasser-Mischung getropft wird, wobei die Temperatur der resultierenden Mischung bis auf 50°C ansteigt. Die wäßrigen Beschichtungsmittel enthalten Vernetzer, vorzugsweise Aminoplastharze.

Aus der US-PS 4,076,676 sind wäßrige Dosenlacke bekannt, die Reaktionsprodukte von Epoxidharzen, welche im Mittel 2 endständige Glycidylgruppen enthalten, beispielsweise die unter der Handelsbezeichnung Epon 1004 und Epon 1007 erhältlichen Epoxidharze, mit tertiären Aminen enthalten. Die Reaktionsprodukte sind quarternäre Ammoniumgruppen enthaltende Addukte. Als Vernetzungsmittel enthalten die aus der US-PS 4,076,676 bekannten Zusammensetzungen Aminoharze. Die gemäß der US-PS 4,076,676 verwendeten Epoxidharze enthalten keine Säuregruppen, die Wasserdispergierbarkeit wird allein durch die quarternären Ammoniumgruppen hervorgerufen. Die Umsetzung zwischen den Epoxidharzen und dem tertiären Amin wird vorzugsweise im Temperaturbereich von 70 bis 80°C durchgeführt.

Aus der US-PS 4,247,439 und der US-PS 4,302,373 sind wäßrige Beschichtungszusammensetzungen für Emballagen bekannt auf Basis von Carboxylgruppen enthaltenden Polymeren, Polyepoxiden und tertiären Aminen. Die Zusammensetzungen können selbstvernetzend sein. Vorzugsweise werden die Zusammensetzungen hergestellt, indem das Epoxidharz in dem COOH-Präpolymer und organischen Lösemitteln gelöst wird und das tertiäre Amin in Wasser der Mischung bevorzugt bei Temperaturen zwischen 50°C und 100°C zugegeben wird. Die Beschichtungsmittel enthalten polymere quarternäre Ammonium-Amin-Salze von polymeren Säuren. Als nachteilig ist bei den wäßrigen Beschichtungsmitteln die Verwendung der COOH-Gruppen enthaltenden Präpolymeren anzusehen, da diese in einem separaten Reaktionsschritt hergestellt werden müssen. Bevorzugt ist auf jeden Fall ein einstufiger Prozeß zur Herstellung der Bindemittelmischungen.

Die WO 89/1498 schließlich betrifft wäßrige Dispersionen, die als Beschichtungsmittel für Metallbehälter zur Aufbewahrung von Lebensmitteln und Getränken geeignet sind. Die Überzugszusammensetzungen enthalten Bindemittelmischungen, die hergestellt werden durch Additionspolymerisation von relativ preisgünstigen Monomeren, wie z.B. Styrol, in einem Reaktionsmedium, welches modifizierte Epoxidharze enthält. Diese werden erhalten durch Reaktion eines Teils der Epoxidgruppen mit ethylenisch ungesättigten Monomeren, die mit Epoxidgruppen reaktionsfähige Gruppen enthalten, wie z.B. ungesättigte Carbonsäuren, und Reaktion weiterer Epoxidgruppen mit tertiären Aminen und mit einem Präadditionspolymer, welches Carboxylgruppen enthält und zur Wasserdispergierbarkeit beiträgt. Die Zusammensetzungen gemäß der WO 89/1498 können je nach Anwendungszweck selbstvernetzend sein, sie haben jedoch den Nachteil, daß die Bindemittelmischungen in mehreren Stufen hergestellt werden müssen, d.h. es werden Carboxylgruppen enthaltende Präpolymere verwendet.

Die der vorliegenden Erfindung zugrunde liegende Aufgabe bestand darin, ein Verfahren zur Herstellung wäßriger Beschichtungsmittel auf Basis Carboxylgruppen enthaltender Epoxidharze zur Verfügung zu stellen, wobei auf die Verwendung zuvor hergestellter COOH-Präpolymerer verzichtet werden sollte. Die nach dem Herstellungsverfahren erhaltenen Beschichtungsmittel sollten also möglichst einfach herstellbare, d.h. möglichst einstufig herstellbare Bindemittel enthalten, die auch u.U. selbstvernetzend sein sollten. Die gemäß dem Verfahren hergestellten wäßrigen Dispersionen bzw. Lösungen auf Basis COOH-modifizierter Epoxidharze sollten stabil sein, d.h. über einen längeren Zeitraum hinweg lagerstabil sein, worunter zu verstehen ist, daß sich die Viskositäten der wäßrigen Dispersionen bzw. Lösungen über einen längeren Zeitraum hinweg nicht wesentlich verändern sollten. Das Verfahren zur Herstellung der wäßrigen Beschichtungsmittel sollte durch einen möglichst geringen Aminbedarf zur Herstellung stabiler.Dispersionen ausgezeichnet sein, da ein reduzierter Aminbedarf aus toxikologischen und ökologischen Gründen erstrebenswert ist und bei geringem Aminbedarf ein größerer Spielraum beim Neutralisationsgrad zur Herstellung einer stabilen Dispersion vorhanden ist bzw. die Viskosität der Dispersion bzw. Lösung in einem größeren Rahmen je nach Anwendung bzw. Applikationsart variiert werden kann.

Die der vorliegenden Erfindung zugrunde liegende Aufgabe wird gelöst durch das Verfahren der eingangs genannten Art, das dadurch gekennzeichnet ist, daß die Neutralisation der organischen Bindemittellösung, enthaltend ein Carboxylgruppen enthaltendes Epoxidharz mit einer Säurezahl im Bereich von 5 bis 200 mg KOH/g, bevorzugt 35 bis 150 mg KOH/g, und einem Epoxidäquivalentgewicht im Bereich von 1000 bis 40000 im Temperaturbereich von 60°C bis 120°C unter Verwendung von tertiärem Amin, ggf. in etwas Wasser gelöst, durchgeführt wird und anschließend die Dispergierung in Wasser erfolgt mit der Maßgabe, daß mindestens 95 % der Epoxidgruppen des Epoxidharzes umgesetzt worden sind.

Das zur Neutralisation verwendete Amin kann also pur oder in einer Teilmenge Wasser gelöst der auf 60°C bis 120°C erhitzten Bindemittellösung zugegeben werden . Besonders bevorzugt ist dabei ein Temperaturbereich von 70°C bis 110°C. Die Aminzugabe findet vorzugsweise unter starkem Rühren statt. Die Zugabezeit des tertiären Amins bzw. des Amin/Wasser-Gemisches sollte etwa 10 bis 30 Minuten betragen. Es ist bevorzugt, das Reaktionsgemisch nach der Aminzugabe noch mindestens 15 Minuten im Temperaturbereich von 60°C bis 120°C zu halten. Die auf diese Weise neutralisierte Bindemittellösung wird anschließend über einen Zeitraum von ca. 30 Minuten in die Restmenge des Wassers eindispergiert. Alternativ kann auch die Restmenge Wasser in die neutralisierte Bindemittel-Lösung eindispergiert werden. Es ist dabei empfehlenswert, das Wasser zuvor auf 40°C bis 80°C zu erwärmen und den Dispergiervorgang in diesem Temperaturbereich durchzuführen. Anschließend wird zweckmäßigerweise noch nachdispergiert. Der Neutralisationsgrad ist selbstverständlich abhängig von der Hydrophilie des verwendeten Bindemittel-Systems.

Geeignete tertiäre Amine sind N-Methylmorpholin, N-Methylpyrrolidin, Pyridin, N-Methylpyrrol, Trimethylamin, Triethylamin, Dimethylethanolamin, Diethylmethylamin, Methyldiethanolamin, Ethylmethylethanolamin, Dimethylethylamin, Dimethylpropylamin, Dimethyl-3-hydroxy-1-propylamin, Dimethylbenzylamin, Dimethyl-2-hydroxy-1-propylamin, Dimethyl-1-hydroxy-2-propylamin sowie Mischungen. Besonders bevorzugt ist Dimethylethanolamin.

Geeignete organische Lösungsmittel sind beispielsweise Monoalkohole mit 3 bis 18 Kohlenstoffatomen, wie z.B. Butanol, iso-Butanol, Propanol, iso-Propanol, 2-Ethylhexylalkohol, Cyclohexanol, Glykolether, wie beispielsweise Butylglykol, Butyldiglykol, Hexylglykol, Glykole, wie Ethylenglykol, Diethylenglykol, 1,3-Butylenglykol, Propylenglykol.

Als Carboxylgruppen enthaltende Epoxidharze werden nach dem erfindungsgemäßen Verfahren bevorzugt solche verwendet, die hergestellt werden durch radikalische Copolymerisation von ethylenisch ungesättigten Monomeren, welche zum Teil Carboxylgruppen enthalten, wie z.B. Acrylsäure, Methacrylsäure, Crotonsäure, Itakonsäure, im Temperaturbereich von 60°C bis 200°C, bevorzugt 120°C bis 140°C, unter Verwendung von mindestens 2 Gew.-%, bezogen auf das Gesamtgewicht der Monomeren, peroxidischer Initiatoren in Gegenwart eines Epoxidharzes mit im Mittel mehr als einer Epoxidgruppe pro Molekül. Derartige Harze werden beispielsweise beschrieben in der US-PS 4,212,781. Als Epoxidausgangsharze werden Polyglycidylether von Bisphenol A bevorzugt. Als ethylenisch ungesättigte Monomere wird vorzugsweise eine Mischung aus Styrol, Methacrylsäure, Ethylacrylat und ggf. noch Methylmethacrylat eingesetzt. Eine weitere geeignete Monomerenmischung besteht aus 2-Ethylhexylacrylat, Methylmethacrylat und Acrylsäure. Die Säuregruppen enthaltenden Monomere werden dabei in einem Anteil eingesetzt, der notwendig ist, um die gewünschte Säurezahl des modifizierten Epoxidharzes zu erreichen. Geeignete radikalische Initiatoren sind z.B. Cumolhydroperoxid, Dibenzoylperoxid, t-Butylperbenzoat, Di-t-butylperoxid, Lauroylperoxid, t-Butylperoxy-2-ethylhexanoat, t-Butylperoxyisononanoat, Methylethylketonperoxid. Gemäß dem erfindungsgemäßen Verfahren kommen aber nicht nur die in der US-PS 4,212,781 als Kohlenstoff-Pfropfcopolymerisate beschriebenen Bindemittel in Frage, sondern auch Bindemittel auf Basis COOH- modifizierter Epoxidharze, die durch Esterpfropfung erhalten werden. Diese entstehen insbesondere, wenn bei niedrigen Initiatorkonzentrationen polymerisiert wird.

Vorzugsweise kommen als Carboxylgruppen enthaltende Epoxidharze mit einer Säurezahl im Bereich von 5 bis 200 mg KOH/g und einem Epoxidäquivalentgewicht im Bereich von 1000 bis 40000 die in der DE-A-40 01 251 beschriebenen Bindemittel in Frage. Diese werden hergestellt, indem
I. bei Temperaturen von 80°C bis 200°C, vorzugsweise bei 120°C bis 180°C, unter Verwendung von Katalysatoren
   A) 20 bis 80 Gew.-% eines Epoxidharzes mit im Mittel mehr als einer Epoxidgruppe pro Molekül und mit einem zahlenmittleren Molekulargewicht von mindestens 850 mit
   B) 1 bis 60 Gew.-% eines carboxylgruppenhaltigen Polyesterharzes mit einem zahlenmittleren Molekulargewicht von 500 bis 5000 und einer Säurezahl von 2 bis < 30 mg KOH/g
   derart umgesetzt worden sind, daß 50 bis < 80 % der anfänglich vorhandenen Oxiranringe geöffnet worden sind, und
II. in Gegenwart des im ersten Verfahrensschritt erhaltenen Reaktionsproduktes
   C) 10 bis 50 Gew.-% ethylenisch ungesättigte Monomere, wobei 10 bis 50 Gew.-% der Monomeren Carboxylgruppen enthalten,
   bei Temperaturen von 60°C bis 200°C, bevorzugt 120°C bis 140°C, unter Verwendung von mindestens 2 Gew.-%, bezogen auf das Gewicht der ethylenisch ungesättigten Monomeren C, peroxidischer Initiatoren polymerisiert worden sind, wobei die Summe der Gewichtsanteile der Komponenten A bis C jeweils 100 Gew.-% beträgt.

Als Komponente A werden bevorzugt Epoxidharze auf Basis von Bisphenol A mit einem zahlenmittleren Molekulargewicht von 850 bis 20.000 eingesetzt. Beispiele für geeignete Epoxidharze sind Glycidylpolyether, die z.B. unter den Warenzeichen Epikote 1001, 1004, 1007, 1008, 1055 und 1009 vertrieben werden. Vorteilhafterweise weisen die Epoxidharze ein zahlenmittleres Molekulargewicht von 1200 bis 3000 auf.

Als Komponente B werden Polyester mit einem zahlenmittleren Molekulargewicht von 500 bis 5000, bevorzugt 1000 bis 3000, und mit einer Säurezahl von 2 bis < 30 mg KOH/g, bevorzugt 10 bis 20 mg KOH/g, eingesetzt.

Die Herstellung der als Komponente B eingesetzten Polyester erfolgt nach den dem Fachmann bekannten Bedingungen für Polyveresterungsreaktionen. Es handelt sich hierbei um bekannte Polykondensate aus aromatischen und/oder aliphatischen Dicarbonsäuren, aromatischen Dicarbonsäureanhydriden, aromatischen Tricarbonsäureanhydriden, aromatischen Tetracarbonsäureanhydriden und -dianhydriden sowie aliphatischen und cycloaliphatischen Mono-, Di- und Triolen. Bevorzugte Ausgangsverbindungen für die Polyester (Komponente B) sind Terephthalsäure, Isophthalsäure, Dimethylterephthalat, o-Phthalsäure, o-Phthalsäureanhydrid, Trimellithsäure, Trimellitsäureanhydrid, Adipinsäure, Sebazinsäure, aliphatische Monoole mit 4 bis 20 Kohlenstoffatomen, 2,2-Dimethyl-1,3-propandiol, Ethylenglykol, Diethylenglykol, 1,6-Hexandiol, Trimethylolpropan, Glycerin, Pentaerythrit.

Die als Komponente C eingesetzten ethylenisch ungesättigten Monomeren bestehen zu 10 bis 50 Gew.-% aus Carboxylgruppen enthaltenden Monomeren. Als Beispiele für Carboxylgruppen enthaltende Monomere sind Acrylsäure und Methacrylsäure zu nennen. Des weiteren können als Monomere nicht funktionalisierte Monomere, wie beispielsweise Styrol, Vinyltoluol und α-Methylstyrol, bevorzugt Styrol, eingesetzt werden.

Als dritte Klasse von Monomeren werden vorzugsweise (Meth)acrylsäureester mit 1 bis 20 Kohlenstoffatomen im Alkoholrest, wobei auch hydroxifunktionelle Monomere eingesetzt werden können, verwendet.

Beispiele hierfür sind Ethylacrylat, Propylacrylat, Isopropylacrylat, Butylacrylat, Isobutylacrylat, t-Butylacrylat, Pentylacrylat, Decylacrylat, Laurylacrylat, Methylmethacrylat, Butylmethacrylat, Isobutylmethacrylat, Hexylmethacrylat, 2-Ethylhexylmethacrylat, Octylmethacrylat, Nonylmethacrylat sowie Hydroxiethylacrylat, Hydroxipropylacrylat, Hydroibutylacrylat, Hydroxiethylmethacrylat, Hydroxipropylmethacrylat und Hydroxibutylmethacrylat.

Die ethylenisch ungesättigten Monomeren der Komponente C bestehen vorzugsweise aus
x) 10 bis 50 Gew.-%, bevorzugt 20 bis 40 Gew.-%, Carboxylgruppen enthaltenden Monomeren,
y) 0 bis 50 Gew.-%, bevorzugt 20 bis 40 Gew.-%, nicht-funktionalisierten Monomeren und
z) 5 bis 60 Gew.-%, bevorzugt 10 bis 50 Gew.-%, (Meth)acrylsäureestern mit 1 bis 20 Kohlenstoffatomen im Alkoholrest, welche ggf. hydroxifunktionell sind,
   wobei die Summe von x, y und z 100 Gew.-% beträgt.

Die Komponente C hat eine Säurezahl im Bereich von 30 bis 150, vorzugsweise im Bereich von 50 bis 100 mg KOH/g.

Vorzugsweise wird das Carboxylgruppen enthaltende Epoxidharz erhalten aus 20 bis 60 Gew.-% A, 10 bis 40 Gew.-% B und 15 bis 40 Gew.-% C, wobei die Summe der Gewichtsanteile der Komponenten A, B und C 100 Gew.-% beträgt.

Zur Initiierung der Polymerisation der Komponenten x, y und z werden mindestens 2 Gew.-%, bevorzugt mindestens 2,6 Gew.-% und besonders bevorzugt mindestens 3 Gew.-%, bezogen auf das Gesamtgewicht der ethylenisch ungesättigten Monomeren, Dibenzoylperoxid oder eines freie Radikale initiierenden Äquivalentes bei der Verwendungstemperatur eingesetzt.
Bevorzugt eingesetzt werden Benzoyloxi- und/oder Phenylradikale liefernde Initiatoren.

Beispiele für geeignete Initiatoren sind Dibenzoylperoxid, t-Butylbenzoylperoxid, tert.-Butylperoctoat, Cumolhydroperoxid und Methylethylketonperoxid, Di-tert.-butylperoxid, tert.-Butylperoxi-2-ethylhexanoat, tert.-Butylperoxiisononanoat, tert.-Butylperoxiisobutyrat und tert.-Amylperoxi-2-ethylhexanoat.

Zur Herstellung der in der DE-A-40 01 251 beschriebenen Carboxylgruppen enthaltenden Epoxidharze wird zunächst das Epoxidharz A bei 80 bis 200°C, vorzugsweise bei 120 bis 180°C, unter Verwendung von Katalysatoren mit der Polyesterkomponente B umgesetzt, so daß mindestens 50 %, bevorzugt 50 bis < 80 % der anfänglich vorhandenen Oxiranringe geöffnet. Anschließend wird in Gegenwart des im ersten Verfahrensschritt erhaltenen Reaktionsproduktes die Komponente C bei 60 bis 200°C, bevorzugt bei 120 bis 140°C, unter Verwendung von mindestens 2 Gew.-%, bezogen auf das Gewicht der ethylenisch ungesättigten Monomeren, peroxidischer, bevorzugt Benzoyloxiund/oder Phenylradikale liefernder Initiatoren radikalisch polymerisiert.
Die im ersten Verfahrensschritt erfolgende Umsetzung des Epoxidharzes mit den Polyesterharzen wird mit Aminen, vorzugsweise mit tertiären Aminen, katalysiert. Die Umsetzung erfolgt in der Weise, daß mindestens 50 %, bevorzugt 50 bis < 80 % der Oxiranringe in β-Hydroxiester- bzw. β-Hydroxiethergruppen überführt werden.

Im zweiten Verfahrensschritt werden die ethylenisch ungesättigten, zum Teil Carboxylgruppen enthaltenden Monomeren der Komponente C in Gegenwart des im ersten Verfahrensschritt erzeugten Epoxi-Polyester-Adduktes einer radikalischen Polymerisationsreaktion unterworfen. Die radikalische Polymerisation wird von mindestens 2 Gew.-%, bezogen auf das Gesamtgewicht der Monomeren, peroxidischer, bevorzugt Benzoyloxiund/oder Phenylradikale liefernder Initiatoren initiiert. Bevorzugt werden dabei mindestens 2,6 Gew.-%, besonders bevorzugt mindestens 3 Gew.-% an Initiatoren verwendet. Selbstverständlich werden auch gute Ergebnisse erzielt, wenn hohe Anteile an Initiatoren, z.B. 8 bis 10 Gew.-%, eingesetzt werden, doch ist dies aus wirtschaftlichen Gründen nicht empfehlenswert. Wird in Gegenwart relativ niedriger Initiatorkonzentrationen, z.B. bei weniger als 3 Gew.-%, bezogen auf das Monomergewicht, polymerisiert, ist ein höherer Neutralisationsgrad nötig, um eine stabile Dispersion zu erhalten.

Vorteilhafterweise wird durch Initiatornachdosierung und/oder durch Verlängerung des Initiatorzulaufs der Anteil an Restmonomeren auf weniger als 0,4 %, bezogen auf das Gesamtgewicht der Bindemittellösung, bestehend aus dem COOH-modifizierten Epoxidharz, Vernetzungsmittel, Neutralisationsmittel und organischem Lösungsmittel, gehalten.

Gemäß der vorliegenden Erfindung werden auch bevorzugt Carboxylgruppen enthaltende Epoxidharze verwendet, die hergestellt werden, indem ein Epoxidharz mit im Mittel mehr als einer Epoxidgruppe pro Molekül ggf. mit einem Diphenol kettenverlängert wird und anschließend mit einem Carbonsäureanhydrid bis zur gewünschten Säurezahl, die im Bereich von 5 bis 200 mg KOH/g liegt, umgesetzt wird. Derartige Epoxidharze sind beispielsweise beschrieben in der DE-PS 27 47 818. Als Epoxidharze werden Diglycidylether von Bisphenolen eingesetzt, wobei vorzugsweise Diglycidylether des Bisphenols A verwendet werden. Die Epoxidharze können ggf. mit Diphenolen, zum Beispiel mit Bisphenol A oder Bisphenol F kettenverlängert werden, wobei jedoch darauf zu achten ist, daß das modifizierte Epoxidharz noch genügend Epoxidgruppen aufweist. Dabei wird die Reaktionsmischung üblicherweise auf etwa 120°C erhitzt. Die Reaktion ist exotherm, so daß die Temperatur des Reaktionsgemisches auf etwa 160°C bis 200°C ansteigt. Nach Beendigung der Adduktbildung wird ein Lösungsmittel der Reaktionsmischung zugegeben, das einen Siedepunkt oberhalb 100°C und bis zu etwa 125°C aufweist und das gegenüber dem anschließend eingesetzten Carbonsäureanhydrid inert ist. Geeignete Lösungsmittel sind Ketone, Ether und Ester. Beispiele sind Methyl-n-propylketon, Methylisobutylketon, Diisobutylether, n-Propylacetat, n-Butylacetat, Isobutylacetat, n-Propylpropionat und Ethylbutyrat. Ketone werden besonders bevorzugt.

Wasserfreie Bedingungen sind vor der Zugabe des Anhydrids notwendig. Gegebenenfalls sind Restbestandteile an Wasser auszukreisen. Nach Entfernung des gesamten Wassers wird das Anhydrid in solcher Menge zugegeben, daß eine Säurezahl zwischen 5 und 200, vorzugsweise zwischen 35 und 150 mg KOH/g, erreicht wird. Die Umsetzung wird üblicherweise bei einer Temperatur zwischen etwa 100 bis 120°C während etwa 2 bis 4 h durchgeführt. Die Umsetzung mit dem Anhydrid ist vollständig, wenn die alkoholische Säurezahl und die wäßrige Säurezahl im wesentlichen gleich sind, üblicherweise mit einem Unterschied von weniger als zwei Einheiten. Um eine gute Lagerstabilität sicherzustellen, muß die Anhydridzahl unterhalb 2 liegen und beträgt vorzugsweise 0. Die Anhydridzahl ist die Differenz zwischen der alkoholischen Säurezahl und der wäßrigen Säurezahl.
Ein Alkoxyethanol, das bei etwa 130°C oder höher siedet, wird zugegeben und das azeotrope Lösungsmittel unter Vakuum entfernt. Wenigstens 2/3 dieses Lösungsmittels müssen entfernt werden, und vorzugsweise sollte das gesamte Lösungsmittel entfernt werden. Danach können andere Lösungsmittel, wie Alkohole, zugegeben werden, um den Feststoffgehalt auf etwa 50 bis 75 Gew.-% zu verringern.

Geeignete cyclische Carbonsäureanhydride sind Trimellitsäureanhydrid, Bernsteinsäureanhydrid, Methylbernsteinsäureanhydrid, Tricarballylsäureanhydrid, Phthalsäureanhydrid, Hexahydrophthalsäureanhydrid und Maleinsäureanhydrid. Bevorzugt wird Trimellitsäureanhydrid verwendet.

Die verwendete Menge an Anhydrid muß ausreichend sein, um eine Säurezahl im Bereich von 5 bis 200 mg KOH/g zu erreichen. Um eine gute Lagerbeständigkeit der aus dem COOH-modifizierten Epoxidharz hergestellten Beschichtungszusammensetzungen sicherzustellen, sollten keine unumgesetzten Anhydridgruppen mehr vorliegen.

Für weitere Einzelheiten bezüglich dieser derart hergestellten Epoxidharze wird auf weitere Ausführungen in der DE-PS 27 47 818 verwiesen. Bei dem vorliegenden erfindungsgemäßen Verfahren ist jedoch darauf zu achten, daß das Epoxidäquivalentgewicht der COOH-modifizierten Epoxidharze im Bereich von 1000 bis 40000 liegt, während gemäß der DE-PS 27 47 818 durch Adduktbildung mit Diphenolen vorzugsweise alle Epoxidgruppen des Ausgangsepoxidharzes umgesetzt sind.

Gemäß dem erfindungsgemäßen Verfahren können auch COOH-modifizierte Epoxidharze verwendet werden, die in der WO 88/1287 beschrieben sind, sofern diese die erforderliche Säurezahl und das erforderliche Epoxidäquivalentgewicht aufweisen.

In dem erfindungsgemäßen Verfahren sind weiterhin Säuregruppen enthaltende urethanmodifizierte Epoxidharze geeignet, die beispielsweise erhältlich sind durch Umsetzung des Reaktionsproduktes aus Hydroxycarbonsäuren und Polyisocyanaten mit den sekundären Hydroxylgruppen eines Epoxidharzes.

Neben den beschriebenen Epoxidharzen kommen weitere COOH-modifizierte Epoxidharze in dem erfindungsgemäßen Verfahren zur Verwendung.

Gemäß dem erfindungsgemäßen Verfahren können ggf.

Vernetzungsmittel verwendet werden. Als Vernetzungsmittel kann jedes beliebige Phenoplastharz eingesetzt werden, solange es die für die Reaktivität erforderliche Methylol-Funktionalität aufweist. Bevorzugte Phenolharze sind unter alkalischen Bedingungen hergestellte Reaktionsprodukte von Phenol, substituierten Phenolen und Bisphenol A mit Formaldehyd. Unter derartigen Bedingungen wird die Methylolgruppe entweder ortho- oder para-ständig mit dem aromatischen Ring verknüpft.

Bevorzugt werden Phenoplastharze vom Resoltyp eingesetzt, die auf Bisphenol A basieren und mehr als eine Methylolgruppe je Phenylring enthalten.

Weitere geeignete Vernetzungsmittel sind Aminoplastharze. Typische Aminoplastharze sind Melamin-, Benzoguanamin- und Harnstoff-Formaldehydharze. Bevorzugt werden diese in mit niedrigen Alkoholen, meistens Methanol und/oder Butanol, veretherter Form verwendet. Geeignete Aminoplastharze sind beispielsweise unter dem Warenzeichen Cymel, Luwipal, Maprenal und Beetle auf dem Markt erhältlich. Ein geeignetes Aminoplastharz ist beispielsweise Hexamethoximethylmelamin.

Selbstverständlich sind neben den Kondensationsprodukten mit Formaldehyd auch solche mit anderen Aldehyden verwendbar.

Weiterhin als Vernetzungsmittel geeignet sind Isocyanatvernetzer, die allein oder zusammen mit dem Phenoplast- und/oder Aminoplastharz eingesetzt werden können. Beispiele für derartige Isocyanatvernetzer sind blockierte Isocyanate, bevorzugt vom Typ Hexamethylendiisocyanat oder Toluylendiisocyanat, die beispielsweise unter dem Warenzeichen Desmodur auf dem Markt erhältlich sind.

Vernetzungsmittel müssen jedoch nicht zwingend eingesetzt werden, da die nach dem erfindungsgemäßen Herstellungsverfahren hergestellten wäßrigen Beschichtungszusammensetzungen auch ohne Vernetzungsmittel zu einem widerstandsfähigen festhaftenden Überzug ausgehärtet werden können, sofern sie eine ausreichende Anzahl an quarternären Ammoniumstrukturen aufweisen.

Die nach dem Herstellungsverfahren der vorliegenden Erfindung hergestellten wäßrigen Beschichtungszusammensetzungen enthalten ggf. übliche Hilfsmittel und Additive sowie ggf. Pigmente und Füllstoffe.

Pigmente und/oder Füllstoffe werden bevorzugt in Mengen von 25 bis 35 Gew.-%, bezogen auf das Gesamtgewicht der Beschichtungsmasse, eingesetzt. Beispiele für geeignete Pigmente sind Titandioxid, beispielsweise die unter den Handelsnamen Titan Rutil RN 59, RTC 60, R 900 und RDI-S erhältlichen Produkte.

Als Füllstoffe geeignet sind Bariumsulfat, wie z.B. die Handelsprodukte Blancfix micro, Blancfix F; Siliciumdioxid, z.B. das Handelsprodukt Quarzmehl SF 600; Kaliumcarbonat und Talkum.

Übliche Hilfsstoffe und Additive sind beispielsweise Gleitmittel, Weichmacher, Stabilisatoren, Netzmittel, Dispergierhilfsmittel, Katalysatoren und oberflächenaktive Zusatzstoffe.

Die für die Erzeugung eines gut verlaufenden Films notwendigen Cosolventien können dem System vor oder nach der Neutralisation mit tertiärem Amin zugegeben werden.

Nach der Neutralisation werden in dem erfindungsgemäßen Verfahren dem System ggf. weitere übliche Hilfsmittel und Additive und ggf. Pigmente, Füllstoffe sowie ggf. Vernetzungsmittel zugemischt, und die Beschichtungszusammensetzung wird in Wasser dispergiert.

Die vorliegende Erfindung betrifft auch die nach dem erfindungsgemäßen Verfahren hergestellten wäßrigen Beschichtungszusammensetzungen.

Die nach dem erfindungsgemäßen Herstellungsverfahren erhaltenen wäßrigen Beschichtungszusammensetzungen härten im Objekttemperaturbereich von 150 bis 400°C während einer Zeit von 2 s bis 10 min. aus. Sie können durch Walzen, Rakeln, Streichen, Spritzen, Fluten oder Tauchen mittels üblicher Vorrichtungen aufgebracht werden, wobei der Film anschießend zu einem festhaftenden Überzug ausgehärtet wird. Die Beschichtungsmassen werden im Falle der Dosenaußenlacke bevorzugt mittels Walzenauftrag appliziert, im Falle der Doseninnenlacke werden sie bevorzugt mittels Spritzapplikation aufgetragen. Die wäßrigen Beschichtungsmassen können auch durch die elektrophoretische Elektrotauchlackierung aufgebracht werden. Dabei werden die zu beschichtenden Teile in ein wäßrigen Bad auf Basis der erfindungsgemäßen, zuvor beschriebenen Überzugsmittel eingetaucht und als Elektrode geschaltet. Mittels Gleichstrom wird ein Film auf den Dosen abgeschieden, das Substrat wird aus dem Bad entfernt, und der Film wird durch Einbrennen gehärtet.

Die Beschichtungsmassen werden bevorzugt als Einschichtlackierung mit einer Trockenfilmschichtdicke von im allgemeinen 5 bis 25 µm aufgebracht.

Die nach dem erfindungsgemäßen Verfahren hergestellten Beschichtungsmassen eignen sich zur Beschichtung von Emballagen, insbesondere zur Außenbeschichtung von Dosen u. dgl. Sie können aber auch zur Innenbeschichtung von Dosen u. dgl. eingesetzt werden. Die Emballagen können dabei aus den unterschiedlichsten Materialien bestehen und unterschiedlichste Geometrien aufweisen. Als Materialien kommen insbesondere Aluminium, Schwarzblech, Weißblech und verschiedene Eisenlegierungen in Frage, die ggf. mit einer Passivierungsschicht auf Basis von Nickel-, Chrom- und Zinkverbindungen versehen sind. Die Emballagen können in Form von beispielsweise Dosenhalbteilen, also Rümpfen und Deckeln, als 3-teilige Dosen und als 2-teilige, abgestreckttiefgezogene oder anderweitig tiefgezogene Dosen, wie z.B. Getränke- und Konservendosen, beschichtet werden.

Vorteile des erfindungsgemäßen Verfahrens bestehen darin, daß die hergestellten wäßrigen Beschichtungszusammensetzungen außerordentlich stabil sind. Nach mehrwöchiger Lagerung der Beschichtungszusammensetzungen sind keine nennenswerten Viskositätsschwankungen festzustellen. Dadurch zeichnet sich das Verfahren gegenüber den bisher bekannten Herstellungsverfahren wäßriger Beschichtungszusammensetzungen auf Basis Carboxylgruppen enthaltender Epoxidharze aus. Diese Stabilisierung der nach dem erfindungsgemäßen Verfahren hergestellten wäßrigen Dispersionen bzw. Lösungen ist vermutlich auf die Bildung von quarternären Ammoniumstrukturen durch die Reaktion des tertiären Amins mit den Oxirangruppen des COOH-modifizierten Epoxidharzes im Temperaturbereich von 60°C bis 120°C zurückzuführen. Die entstehenden Zwitterionen-Strukturen sind in einem gewissen Temperaturbereich stabil und stabilisieren die wäßrigen Dispersionen bzw. Lösungen sowohl durch anionische als auch durch kationische Strukturen. Es wird vermutet, daß bei erhöhter Temperatur, und zwar unter Einbrennbedingungen, das tertiäre Amin wieder abgespalten wird und die Oxiranringe wieder zurückgebildet werden. Die in wäßrigem Medium labilen Epoxidgruppen werden daher in dem erfindungsgemäßen Verfahren durch Überführung in quarternäre Ammoniumstrukturen geschützt, damit sie nach der Applikation für Vernetzungsreaktionen bereitstehen. Außerdem ist es sehr vorteilhaft, daß die Epoxidgruppen geschützt sind während der Lagerung der wäßrigen Beschichtungszusammensetzungen und damit nicht zu unerwünschten Viskositätsschwankungen der wäßrigen Beschichtungszusammensetzungen führen können.

Als weiterer Vorteil ist anzusehen, daß die gemäß dem erfindungsgemäßen Verfahren hergestellten Dispersionen bzw. Lösungen selbstvernetzend ausgeführt sein können, da die geschützten Epoxidgruppen während des Härtungsvorganges wieder freigesetzt werden und für Vernetzungsreaktionen zur Verfügung stehen.

Weitere Vorteile des erfindungsgemäßen Verfahrens bestehen darin, daß der für die Herstellung stabiler Dispersionen bzw. Lösungen notwendige Mengenanteil an Amin verglichen mit bekannten Herstellungsverfahren wesentlich geringer ist. Dies ist vermutlich auf die ionische Stabilisierung durch die quarternären Ammoniumstrukturen zurückzuführen. Reduzierte Aminmengen zur Herstellung stabiler Dispersionen sind zum einen aus toxikologischen und ökologischen Gründen erstrebenswert. Zum anderen bestimmt der Anteil an Amin die Viskosität der wäßrigen Zusammensetzungen und damit letztendlich auch die Applikationseigenschaften der Überzugszusammensetzungen. Höhere Anteile an Amin führen bekanntermaßen zu höheren Viskositäten als niedrige Aminmengen, daher werden bei höheren Aminmengen höhere Wasseranteile zur Viskositätskontrolle benötigt. Infolge des größeren Spielraumes beim Neutralisationsgrad zur Herstellung stabiler Dispersionen bzw. Lösungen können gemäß dem vorliegenden Verfahren der pH-Wert und damit auch die Viskosität der wäßrigen Dispersionen bzw. Lösungen verglichen mit den aus dem Stand der Technik bekannten Herstellungsverfahren in einem größeren Rahmen variiert werden. Dies ist besonders vorteilhaft, da je nach Applikationsart der wäßrigen Überzugszusammensetzungen unterschiedliche Viskositäten der Beschichtungsmassen erforderlich sind. Überzugszusammensetzungen, die nach dem Walzenauftragsverfahren appliziert werden sollen, müssen z.B. höhere Viskositäten haben als Beschichtungsmassen, die mittels Spritzapplikation aufgebracht werden sollen.

Ein weiterer Vorteil der nach dem erfindungsgemäßen Verfahren hergestellten Beschichtungszusammensetzungen besteht darin, daß die erhaltenen Überzüge besonders gut auf Stahlsubstraten haften.

Nachfolgend wird die Erfindung anhand von Ausführungsbeispielen näher erläutert:

### Beispiel 1

### 1.1 Herstellung einer Polyestervorstufe

In einem Vierhalskolben, der mit Rührer, Thermometer und Wasserabscheider ausgestattet ist, werden 674 g Terephthalsäure, 112 g Trimellitsäureanhydrid, 847 g Adipinsäure, 19 g Pentaerythrit, 1215 g Diethylenglykol und 8 g Veresterungskatalysator eingewogen und bei 230°C auf eine Säurezahl von 15 mg KOH/g kondensiert. Die Polyesterschmelze wird schließlich 75 %ig in Butylglykol angelöst. Die Anlösung besitzt eine Viskosität von 3840 mPas (Platte-Kegel-Viskosimeter, 23°C).

### 1.2 Herstellung eines Epoxiesterharzes

In einem Vierhalskolben, der mit Rührer, Thermometer und Rückflußkühler ausgestattet ist, wird eine Mischung aus 772 g eines Epoxidharzes auf Basis Bisphenol A mit einem Epoxi-Äquivalentgewicht von 940, 254 g Butylglykol, 2 g N,N-Dimethylbenzylamin und 1023 g des gemäß 1.1 hergestellten Polyesterharzes auf 160°C erwärmt, bis die Säurezahl unter 2 mg KOH/g gefallen ist. Der so hergestellte Epoxiester besitzt in 30 %iger Lösung in Butylglykol eine Viskosität von 50 mPas (Platte-Kegel-Viskosimeter, 23°C).

### 1.3 Herstellung eines Copolymerisates

In einem Vierhalskolben, der mit Thermometer, Rückflußkühler und zwei Zulaufgefäßen ausgestattet ist, werden 2051 des gemäß 1.2 hergestellten Epoxiesters vorgelegt. Dazu gibt man bei 120°C gleichzeitig aus dem ersten Zulaufbehälter eine Mischung aus 163 g Acrylsäure, 166 g Styrol und 327 g Butylacrylat und aus dem zweiten Zulaufbehälter eine Lösung von 25 g Dibenzoylperoxid (75 %ig) in 122 g Methylethylketon. Die Monomeren werden während 2 h, der Initiator während 2,5 h zudosiert. Nach Beendigung der Polymerisation wird mit Butylglykol auf einen Festkörper von 60 % eingestellt. Das Bindemittel besitzt eine Säurezahl von 57 mg KOH/g (bezogen auf den Festkörper) und in 30 %iger Lösung in Butylglykol eine Viskosität von 120 mPas (Platte-Kegel-Viskosimeter, 23°C).

### 1.4 Neutralisation des Copolymerisates aus 1.3 nach beanspruchtem Verfahren (35 % Neuralisationsgrad)

In einem Vierhalskolben, der mit Rührer, Thermometer und Rückflußkühler und einem Zulaufbehälter ausgestattet ist, werden 1000 g des gemäß 1.3 hergestellten Copolymerisates eingewogen und auf 110°C aufgeheizt. In dem Zulaufbehälter werden 19 g Dimethylethanolamin vorgelegt und über einen Zeitraum von 10 min der Copolymerisatlösung zudosiert. Die Mischung wird noch 20 min bei 110°C gehalten und anschließend abgekühlt.

### 1.5 Herstellung eines Außenweißlackes A für Getränkedosen mit der gemäß 1.4 neutralisierten Bindemittellösung

Zur Herstellung eines Außenweißlackes A für Getränkedosen werden 24,30 Teile der gemäß 1.4 neutralisierten Bindemittellösung mit 2.50 Teilen Blanc Fix Micro, 23,60 Teilen Titandioxid vom Rutiltyp und 0,05 Teilen Poly(tetrafluorethylen)-Wachs (z.B. Lanco TF 1780) ca. 10 min. angerieben, so daß eine Feinheit kleiner 10 µm resultiert. Zu der Anreibung gibt man weitere 4.30 Teile eines handelsüblichen Benzoguanaminharzes (z.B. Luwipal B017, Cymel 1123), 3.00 Teile eines Epoxiesters (z.B. Resydrol 5171), 0,90 Teile eines geblockten Isocyanates (z.B. Desmodur 2759), 1,90 Teile eines Polyethylen-Wachses (z.B. Luba Print VP 714) und 11,75 Teile Butylglykol. Die Mischung wird anschließend in 21,80 Teile voll entsalztes Wasser eindispergiert. Der Lack besitzt eine Auslaufzeit von 210 sec, einen pH-Wert von 6,7 und ist über einen Zeitraum von mehr als 3 Monaten lagerstabil.

### 1.6 Vergleichsbeispiel: Herstellung eines Außenweißlackes B für Getränkedosen (35 % Neutralisationsgrad)

Zur Herstellung eines Außenweißlackes B für Getränkedosen werden 24,30 Teile der unter 1.3 hergestellten Bindemittellösung mit 2,50 Teilen Blanc Fix Micro, 23,60 Teilen Titandioxid vom Rutiltyp und 0,05 Teilen Poly(tetrafluorethylen)-Wachs (z.B. Lanco TF 1780) ca. 10 min. angerieben, so daß eine Feinheit kleiner 10 µm resultiert. Zu der Anreibung gibt man weitere 4,30 Teile eines handelsüblichen Benzoguanaminharzes (z.B. Luwipal B017, Cymel 1123), 3,00 Teile eines Epoxiesters (z.B. Resydrol 5171), 0,90 Teile eines geblockten Isocyanates (z.B. Desmodur 2759), 1,90 Teile eines Polyethylen-Wachses (z.B. Luba Print VP 714), 11,75 Teile Butylglykol und neutralisiert mit 0,46 Teilen Dimethylethanolamin (entspricht einem Neutralisationsgrad von 35 %). Die Mischung wird anschließend in 21,80 Teile voll entsalztes Wasser eindispergiert. Der Lack setzt innerhalb kurzer Zeit ab.

### 1.7 Vergleichsbeispiel: Herstellung eines Außenweißlackes C für Getränkedosen (56 % Neutralisationsgrad)

Zur Herstellung eines Außenweißlackes C für Getränkedosen werden 24,30 Teile der gemäß 1.3 hergestellten Bindemittellösung mit 2,50 Teilen Blanx Fix Micro, 23,60 Teilen Titandioxid vom Rutiltyp und 0,05 Teilen PTFE-Wachs (z.B. Lanco TF 1780) ca. 10 min. angerieben, so daß eine Feinheit kleiner 10 µm resultiert. Zu der Anreibung gibt man weitere 4,30 Teile eines handelsüblichen Benzoguanaminharzes (z.B. Luwipal B017, Cymel 1123), 3,00 Teile eines Epoxiesters (z.B. Resydrol 5171), 0,90 Teile eines geblockten Isocyanates (z.B. Desmodur 2759), 1,90 Teile eines PE-Wachses (z.B. Luba Print VP 714), 11,75 Teile Butylglykol und neutralisiert mit 0,74 Teilen Dimethylethanolamin (entspricht einem Neutralisationsgrad von 56 %). Die Mischung wird anschließend in 21,80 Teile voll entsalztes Wasser eindispergiert. Der Lack besitzt eine Auslaufzeit von 256 sec, einen pH-Wert von 7,1 und ist über einen Zeitraum von mehr als 3 Monaten lagerstabil.

### Beispiel 2

### 2.1 Herstellung eines Epoxiacrylates

In einem Vierhalskolben, der mit Rührer, Thermometer, Rückflußkühler und zwei Zulaufgefäßen ausgestattet ist, werden 1187 g eines Epoxidharzes auf Basis Bisphenol-A mit einem Epoxidäquivalentgewicht von 1720 in 515 g Butylglykol und 486 g n-Butanol vorgelegt. Dazu gibt man bei 120°C gleichzeitig aus dem ersten Zulaufbehälter eine Mischung aus 217 g Methacrylsäure, 137 g Styrol und 150 g Ethylacrylat und aus dem zweiten Zulaufbehälter eine Lösung von 19 g Dibenzoylperoxid (75 %ig) in 97 g Methylethylketon. Die Monomeren werden über einen Zeitraum von 2 h, der Initiator während 2,5 h zudosiert. Nach Beendigung der Polymerisation wird mit n-Butanol auf einen Festkörper von 60 % eingestellt. Das Bindemittel besitzt eine Säurezahl von 83 mg KOH/g in 30 %iger Lösung in Butylglykol, eine Viskosität von 280 mPas (Platte-Kegel-Viskosimeter, 23°C)

### 2.2 Neutralisation des gemäß 2.1 hergestellten Epoxiacrylates nach beanspruchtem Verfahren (30 % Neutralisationsgrad)

In einem Vierhalskolben, der mit Rührer, Thermometer, Rückflußkühler und einem Zulaufbehälter ausgestattet ist, werden 1000 g des Epoxiacrylates 2.1 eingewogen und auf 110°C aufgeheizt. In dem Zulaufbehälter werden 23,3 g Dimethylethanolamin vorgelegt und über einen Zeitraum von 15 min. zudosiert. Die Reaktionsmischung wird dann noch 30 min bei 110°C gehalten.

### 2.3 Herstellung eines wasserverdünnbaren Innenspritzlackes D für Getränkedosen mit neutralisiertem Bindemittel aus 2.2 (30 % Neutralisationsgrad)

1023,3 g des neutralisierten Bindemittels aus 2.2 werden über einen Zeitraum von 30 min. in 1484 g vollentsalztem Wasser eindispergiert. Anschließend wird noch 1 h nachdispergiert. Die resultierende Dispersion weist einen Festkörper von 24 % (15 min, 200°C) auf und besitzt eine Auslaufzeit von 12 s (DIN 4, 20°C). Der pH-Wert liegt bei 6,7. Die Dispersion ist über einen Zeitraum von mehr als 3 Monaten lagerstabil. Die Auslaufzeit der Dispersion bleibt über diesen Zeitraum konstant.

### 2.4 Vergleichsbeispiel: Herstellung eines wasserverdünnbaren Innenspritzlackes E für Getränkedosen (30 % Neutralisationsgrad)

In einem Dissolver werden 23,3 g Dimethylethanolamin und 1484 g vollentsalztes Wasser gemischt. In diese wäßrige Aminlösung werden über einen Zeitraum von 30 Minuten 1000 g des gemäß 2.1 hergestellten Bindemittels eindispergiert. Die resultierende Dispersion weist einen Festkörper von 24 % (15 min; 200°C) auf und besitzt eine Auslaufzeit von 13 sec (DIN 4, 20°C). Der pH-Wert liegt bei 6,8. Die Dispersion ist nicht stabil und setzt nach kurzer Zeit ab.

### 2.5 Neutralisation des gemäß 2.1 hergestellten Epoxiacrylates nach beanspruchtem Verfahren (42 % Neutralisationsgrad)

In einem Vierhalskolben, der mit Rührer, Thermometer, Rückflußkühler und einem Zulaufbehälter ausgestattet ist, werden 1000 g des gemäß 2.1 hergestellten Epoxiacrylates eingewogen und auf 110°C aufgeheizt. In dem Zulaufbehälter werden 32,6 g Dimethylethanolamin vorgelegt und über einen Zeitraum von 15 min zudosiert. Die Reaktionsmischung wird dann noch 30 min bei 110°C gehalten.

### 2.6 Herstellung eines wasserverdünnbaren Innenspritzlackes F für Getränkedosen (42 % Neutralisationsgrad)

1032,6 g des gemäß 2.2 neutralisierten Bindemittels werden über einen Zeitraum von 30 min in 1449 g vollentsalztes Wasser eindispergiert. Anschließend wird noch 1 h nachdispergiert. Die resultierende Dispersion weist einen Festkörper von 24 % (15 min, 200°C) auf und besitzt eine Auslaufzeit von 22 s (DIN 4, 20°C). Der pH-Wert liegt bei 7,0. Die Dispersion ist über einen Zeitraum von mehr als 3 Monaten lagerstabil. Die Auslaufzeit der Dispersion bleibt über diesen Zeitraum konstant.

### 2.7 Vergleichsbeispiel: Herstellung eines wasserverdünnbaren Innenspritzlackes G für Getränkedosen (42 % Neutralisationsgrad)

In einem Dissolver werden 32,6 g Dimethylethanolamin und 1474 g vollentsalztes Wasser gemischt. Zu dieser wäßrigen Aminlösung werden über einen Zeitraum von 30 min 1000 g des unneutralisierten, gemäß 2.1 hergestellten Bindemittels eindispergiert. Die resultierende Dispersion weist einen Festkörper von 24 % (15 in, 200°C) auf und besitzt eine Auslaufzeit von 17 s (DIN 4, 20°C). Der pH-Wert liegt bei 6,9. Die Dispersion ist nicht stabil und setzt über Nacht ab.

### 2.8 Vergleichsbeispiel: Herstellung eines wasserverdünnbaren Innenspritzlackes H für Getränkedosen (75 % Neutralisationsgrad)

In einem Dissolver werden 57,6 g Dimethylethanolamin und 1449 g vollentsalztes Wasser gemischt. Zu dieser wäßrigen Aminlösung werden über einen Zeitraum von 30 min 1000 g des unneutralisierten, gemäß 2.1 hergestellten Bindemittels eindispergiert. Die resultierende Dispersion weist einen Festkörper von 24 % (15 min, 200°C) auf und besitzt eine Auslaufzeit von 43 s (DIN 4, 20°C). Der pH-Wert liegt bei 7.2. Die Dispersion ist über einen Zeitraum von mehr als 3 Monaten lagerstabil, wobei sich jedoch die Auslaufzeit in diesem Zeitraum ändert.

### Beispiel 3

### 3.1 Herstellung eines Epoxidharzes mit einem Epoxidäquivalentgewicht von 1740 aus flüssigem Epoxidharz und Bisphenol-A

In einem Vierhalskolben, der mit Rührer, Thermometer und Rückflußkühler ausgestattet ist, werden 1093 g eines flüssigen Epoxidharzes auf Basis Bisphenol-A mit einem Epxoxiäquivalentgewicht von 187, 556 g Bisphenol-A, 0,5 g Ethyltriphenylphosphoniumjodid und 183 g Butylglykol vorgelegt. Man erwärmt die Mischung so, daß die Reaktionstemperatur auf maximal 165°C ansteigt und fährt die Reaktion, bis ein Epoxiäquivalentgewicht von 1740 erreicht wird. Anschließend wird mit 430 g Butylglykol und 442 g Hexylglykol angelöst.

### 3.2 Herstellung eines Epoxiacrylates

In einem Vierhalskolben, der mit Rührer, Thermometer, Rückflußkühler und zwei Zulaufgefäßen ausgestattet ist, weden 2678 g der gemäß 3.1 hergestellten Epoxidharzlösung vorgelegt. Dazu gibt man bei 140°C gleichzeitig aus dem ersten Zulaufbehälter eine Mischung aus 298 g Methacrylsäure, 188 g Styrol und 206 g Ethylacryalat und aus dem zweiten Zulaufbehälter eine Lösung von 16 g tert.-Butylperbenzoat in einer Mischung aus 53 g Butylglykol und 38 g Hexylglykol. Die Monomeren werden über einen Zeitraum von 2 h, der Initiator während 2,5 h zudosiert. Nach Beendigung der Polymerisation wird mit 226 g Butylglykol und 163 g Hexylglykol auf einen Festkörper von 60 % eingestellt. Das Bindemittel besitzt eine Säurezahl von 70 mg KOH/g und in 30 %iger Lösung in Butylglykol eine Viskosität von 440 mPas (Platte-Kegel-Viskosimeter, 23°C).

### 3.3 Neutralisation des gemäß 3.2 hergestellten Epoxiacrylates nach beanspruchtem Verfahren (42 % Neutralisationsgrad)

In einem Vierhalskolben, der mit Rührer, Thermometer, Rückflußkühler und einem Zulaufbehälter ausgestattet ist, werden 1000 g des gemäß 3.2 hergestellten Epoxiacrylates eingewogen und auf 90°C aufgeheizt. In dem Zulaufbehälter wird eine Lösung von 33,4 g Dimethylethanolamin in 111 g vollentsalztem Wasser vorgelegt und über einen Zeitraum von 15 min zudosiert. Die Reaktionsmischung wird dann noch 30 min bei 90°C gehalten und anschließend abgekühlt.

### 3.4 Vergleichsbeipiel: Neutralisation des unter 3.2 hergestellten Epoxiacrylates ohne Wärmezufuhr (42 % Neutralisationsgrad)

Zu 1000 g des Epxoxiacrylates aus 3.2 werden bei Raumtemperatur unter Rühren langsam 33,4 g Dimethylethanolamin zugegeben. Die Mischung wird solange gerührt, bis eine einheitlich Lösung entstanden ist.

### 3.5 Zeitlicher Verlauf der Viskositäten der neutralisierten Bindemittellösungen aus 3.3 und 3.4 sowie der unneutralisierten Bindemittellösung aus 3.2

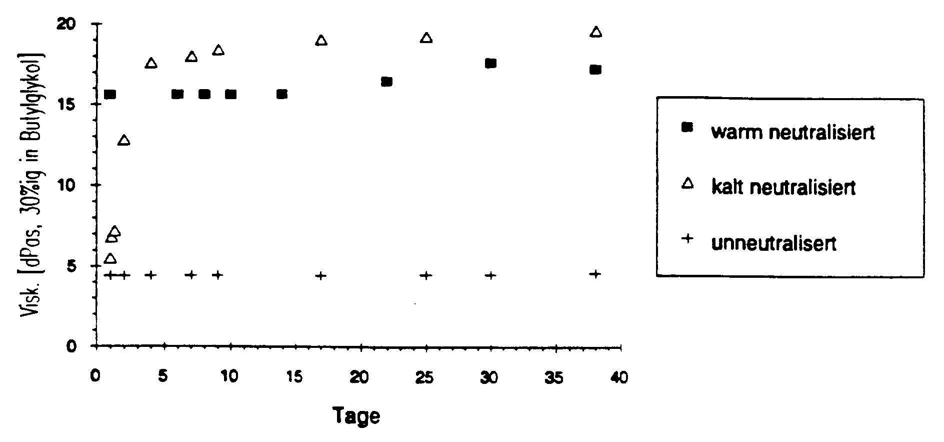

Das kalt neutralisierte Bindemittel aus 3.4 zeigt innerhalb der ersten 8 Tage einen deutlichen Viskositätsanstieg, während das nach dem erfindungsgemäßen Verfahren warm neutralisierte Bindemittel aus 3.3 sich nach der Neutralisation auf gleichbleibendem Viskositätsniveau bewegt. Der leichte Anstieg der Viskosität beim warmneutralisierten Bindemittel aus 3.3 dürfte auf Lösungsmittelverluste zurückzuführen sein und entspricht einer Steigerung von 0,2 Scalenwerten am verwendeten Viskosimeter. Es können nur die relativen Tendenzen und nicht die absoluten Werte verglichen werden, da das Bindemittel aus 3.3 infolge des geringen Wasseranteils einen etwas niedrigeren Festkörper besitzt als das neutralisierte Bindemittel aus 3.4. Das nichtneutralisierte Bindemittel besitzt über den gesamten Zeitraum eine gleichbleibende Viskosität.

## Patentansprüche

1. Verfahren zur Herstellung einer wäßrigen Beschichtungszusammensetzung, enthaltend ein Carboxylgruppen enthaltendes Epoxidharz, ggf. Vernetzungsmittel, organische Lösemittel, ggf. übliche Hilfsstoffe und Additive sowie ggf. Pigmente und Füllstoffe, wobei die Neutralisation der organischen Bindemittellösung mit tertiärem Amin unter Wärmezufuhr erfolgt, dadurch gekennzeichnet, daß die Neutralisation der organischen Bindemittellösung, enthaltend ein Carboxylgruppen enthaltendes Epoxidharz mit einer Säurezahl im Bereich von 5 bis 200 mg KOH/g, bevorzugt 35 bis 150 mg KOH/g, und einem Epoxidäquivalentgewicht im Bereich von 1000 bis 40000 im Temperaturbereich von 60° C bis 120°C unter Verwendung von tertiärem Amin, ggf. in etwas Wasser gelöst, durchgeführt wird und anschließend die Dispergierung in Wasser erfolgt mit der Maßgabe, daß mindestens 95 % der Epoxidgruppen des Epoxidharzes umgesetzt worden sind.

2. Verfahren nach Anspruch 1, dadurch gekennzeichnet, daß das Reaktionsgemisch nach der Neutralisation mit tertiärem Amin noch mindestens 15 Minuten im Temperaturbereich von 60°C bis 120°C gehalten wird.

3. Verfahren nach Anspruch 1, dadurch gekennzeichnet, daß die Neutralisation der organischen Bindemittellösung im Temperaturbereich von 70°C bis 110°C erfolgt.

4. Verfahren nach Anspruch 1 bis 3, dadurch gekennzeichnet, daß das Carboxylgruppen enthaltende Epoxidharz hergestellt wird durch Umsetzung von ethylenisch ungesättigten Monomeren, welche z. T. Carboxylgruppen enthalten, im Temperaturbereich von 60°C bis 200°C, bevorzugt 120°C bis 140°C unter Verwendung von mindestens 2 Gew.-%, bezogen auf das Gesamtgewicht der ethylenisch ungesättigten Monomeren, peroxidischer Initiatoren in Gegenwart eines Epoxidharzes mit im Mittel mehr als einer Epoxidgruppe pro Molekül.

5. Verfahren nach Anspruch 1 bis 3, dadurch gekennzeichnet, daß das Carboxylgruppen enthaltende Epoxidharz hergestellt wird, indem
I. bei Temperaturen von 80°C bis 200°C, vorzugsweise bei 120°C bis 180°C, unter Verwendung von Katalysatoren
A) 20 bis 80 Gew.-% eines Epoxidharzes mit im Mittel mehr als einer Epoxidgruppe pro Molekül und einem zahlenmittleren Molekulargewicht von mindestens 850 mit.
B) 1 bis 60 Gew.-% eines carboxylgruppenhaltigen Polyesterharzes mit einem zahlenmittleren Molekulargewicht von 500 bis 5000 und einer Säurezahl von 2 bis < 30 mg KOH/g
derart umgesetzt worden sind, daß 50 bis < 80% der anfänglich vorhandenen Oxiranringe geöffnet worden sind, und
II. in Gegenwart des im ersten Verfahrensschritt erhaltenen Reaktionsproduktes
C) 10 bis 50 Gew.-% ethylenisch ungesättigte Monomere, wobei 10 bis 50 Gew.-%, der Monomeren Carboxylgruppen enthalten, bei Temperaturen von 60°C bis 200°C, bevorzugt 120°C bis 140°C, unter Verwendung von mindestens 2 Gew.-%, bezogen auf das Gesamtgewicht der ethylenisch ungesättigten Monomeren C, peroxidischer Initiatoren polymerisiert worden sind, wobei die Summe der Gewichtsanteile der Komponenten A bis C jeweils 100 Gew.-% beträgt.

6. Verfahren nach Anspruch 1 bis 3, dadurch gekennzeichnet, daß das Carboxylgruppen enthaltende Epoxidharz hergestellt worden ist, indem ein Epoxidharz mit im Mittel mehr als einer Epoxidgruppe pro Molekül ggf. mit einem Diphenol kettenverlängert wird und anschließend mit einem Carbonsäureanhydrid bis zur gewünschten Säurezahl umgesetzt wird.

7. Wäßrige Beschichtungszusammensetzung, hergestellt nach dem Verfahren gemäß Anspruch 1 bis 6.

8. Verwendung der wäßrigen Beschichtungszusammensetzung nach Anspruch 7 zur Beschichtung von Emballagen.

9. Verwendung der wäßrigen Beschichtungszusammensetzung nach Anspruch 7 zur Außenbeschichtung von Dosen.

10. Verwendung der wäßrigen Beschichtungszusammensetzung nach Anspruch 7 zur Innenbeschichtung von Dosen.

11. Verwendung der wäßrigen Beschichtungszusammensetzung nach Anspruch 7 zur Beschichtung von Dosen aus Stahl.

## Claims

1. Process for the preparation of an aqueous coating composition containing a carboxyl-containing epoxy resin, optionally crosslinking agents, organic solvents, optionally conventional assistants and additives, and optionally pigments and fillers, in which the organic binder solution is neutralized by means of a tertiary amine with supply of heat, characterized in that the organic binder solution, containing a carboxyl-containing epoxy resin having an acid number in the range from 5 to 200 mg of KOH/g, preferably from 35 to 150 mg of KOH/g, and having an epoxide equivalent weight in the range from 1000 to 40,000, is neutralized in the temperature range from 60°C to 120°C using a tertiary amine, optionally dissolved in a little water, and the dispersion in water is carried out subsequently, with the proviso that at least 95% of the epoxide groups of the epoxy resin have been reacted.

2. Process according to Claim 1, characterized in that the reaction mixture is kept in the temperature range from 60°C to 120°C for at least 15 minutes after the neutralization by means of tertiary amine.

3. Process according to Claim 1, characterized in that the neutralization of the organic binder solution is carried out in the temperature range from 70°C to 110°C.

4. Process according to Claims 1 to 3, characterized in that the carboxyl-containing epoxy resin is prepared by reacting ethylenically unsaturated monomers, some of which contain carboxyl groups, in the temperature range from 60°C to 200°C, preferably from 120°C to 140°C, using at least 2% by weight, based on the total weight of the ethylenically unsaturated monomers, of peroxidic initiators in the presence of an epoxy resin containing on average more than one epoxide group per molecule.

5. Process according to Claims 1 to 3, characterized in that the carboxyl-containing epoxy resin is prepared by
I. reacting
A) from 20 to 80% by weight of an epoxy resin containing on average more than one epoxide group per molecule and having a number average molecular weight of at least 850 with
B) from 1 to 60% by weight of a carboxyl-containing polyester resin having a number average molecular weight of from 500 to 5000 and an acid number of from 2 to < 30 mg of KOH/g
at temperatures of from 80°C to 200°C, preferably at from 120°C to 180°C, using catalysts, in such a way that from 50 to < 80% of the oxirane rings initially present have been opened, and
II. polymerizing
C) from 10 to 50% by weight of ethylenically unsaturated monomers, from 10 to 50% by weight of the monomers containing carboxyl groups, in the presence of the reaction product obtained in the first process step, at temperatures of from 60°C to 200°C, preferably from 120°C to 140°C, using at least 2% by weight, based on the total weight of the ethylenically unsaturated monomers C, of peroxidic initiators, where the sum of the proportions by weight of components A to C is in each case 100% by weight.

6. Process according to Claims 1 to 3, characterized in that the carboxyl-containing epoxy resin has been prepared by optionally chain-extending an epoxy resin containing on average more than one epoxide group per molecule by means of a diphenol and subsequently reacting this with a carboxylic anhydride until the desired acid number has been reached.

7. Aqueous coating composition prepared by the process according to Claims 1 to 6.

8. Use of the aqueous coating composition according to Claim 7 for coating packaging containers.

9. Use of the aqueous coating composition according to Claim 7 for the external coating of cans.

10. Use of the aqueous coating composition according to Claim 7 for the internal coating of cans.

11. Use of the aqueous coating composition according to Claim 7 for coating steel cans.

## Revendications

1. Procédé de production d'une composition de revêtement aqueuse, contenant une résine époxyde contenant des groupements carboxyles, le cas échéant, des agents de reticulation, des solvants organiques, le cas échéant, des additifs et adjuvants usuels ainsi que, le cas échéant, des pigments et des charges, la neutralisation de la solution organique de liant se faisant à l'aide d'une amine tertiaire sous apport de chaleur, caractérisé en ce que la neutralisation de la solution organique de liant, contenant une résine époxyde contenant des groupements carboxyles, ayant un indice d'acidité dans le domaine de 5 à 200 mg de KOH/g, de préférence de 35 à 150 mg de KOH/g et un poids équivalent en époxyde dans le domaine de 1 000 à 40 000 dans le domaine de température de 60°C à 120°C, est effectué grâce à l'emploi d'une amine tertiaire, le cas échéant, dissoute dans un peu d'eau et en ce que la mise en dispersion dans l'eau se fait sous réserve qu'au moins 95 % des groupements époxydes de la résine époxyde aient réagi.

2. Procédé selon la revendication 1, caractérisé en ce que le mélange réactionnel est maintenu après la neutralisation avec l'amine tertiaire encore pendant 15 minutes dans le domaine de température de 60°C à 120°C.

3. Procédé selon la revendication 1, caractérisé en ce que la neutralisation de la solution organique de liant se fait dans le domaine de température de 70°C à 110°C.

4. Procédé selon la revendication 1 à 3, caractérisé en ce que la résine époxyde contenant des groupements carboxyles est produite par la réaction de monomères éthyléniquement insaturés, qui contiennent en partie des groupements carboxyles, dans le domaine de température de 60°C à 120°C, de préférence de 120°C à 140°C, grâce à l'emploi d'au moins 2 % en poids, par rapport au poids total des monomères éthyléniquement insaturés, d'agents initiateurs peroxydiques en présence d'une résine époxyde ayant en moyenne plus d'un groupement époxyde par molécule.

5. Procédé selon la revendication 1 à 3, caractérisé en ce que la résine époxyde contenant des groupements carboxyles est produite en ce que l'on a fait réagir
I. à des températures de 80°C à 200°C, de préférence de 120°C à 180°C, grâce à l'emploi de catalyseurs,
A) de 20 à 80 % en poids d'une résine époxyde ayant en moyenne plus d'un groupement époxyde par molécule et ayant un poids moléculaire moyen au nombre d'au moins 850 avec
B) de 1 à 60 % en poids d'une résine de polyester contenant des groupements carboxyles ayant un poids moléculaire moyen au nombre de 500 à 5 000 et ayant une indice d'acidité de 2 à < 30 mg de KOH/g,
de sorte que de 50 à < 80 % des cycles oxirane présents initialement aient été ouverts, et en ce que l'on a procédé à la polymérisation,
II. en présence du produit de réaction obtenu dans la première étape du procédé,
C) de 10 à 50 % en poids des monomères éthyléniquement insaturés, de 10 à 50 % en poids des monomères contenant des groupements carboxyles, à des températures de 60°C à 200°C, de préférence de 120°C à 140°C, grâce à l'emploi d'au moins 2 % en poids, par rapport au poids total des monomères C éthyléniquement insaturés, d'agents initiateurs peroxydiques, la somme des proportions en poids des composants A à C étant à chaque fois de 100 % en poids.

6. Procédé selon la revendication 1 à 3, caractérisé en ce que la résine époxyde contenant des groupements carboxyles a été produite en ce que l'on procède à la prolongation de chaîne d'une résine époxyde ayant en moyenne plus d'un groupement époxyde par molécule, le cas échéant, avec un diphénol, et en que l'on fait réagir ensuite avec un anhydride d'acide carboxylique jusqu'à obtention de l'indice d'acidité souhaité.

7. Composition de revêtement aqueuse, produite conformément au procédé selon la revendication 1 à 6.

8. Utilisation des compositions de revêtement aqueuses selon la revendication 7, en vue du revêtement d'emballages.

9. Utilisation des compositions de revêtement aqueuses selon la revendication 7, en vue du revêtement externe de boîtes de conserve.

10. Utilisation des compositions de revêtement aqueuses selon la revendication 7, en vue du revêtement interne de boîtes de conserve.

11. Utilisation des compositions de revêtement aqueuses selon la revendication 7, en vue du revêtement de boîtes de conserve en acier.
